# EUROPEAN PATENT SPECIFICATION

(11) **EP 4 185 550 B1**
(45) Date of publication and mention of the grant of the patent: **26.02.2025**
(21) Application number: 20946002.1
(22) Date of filing: 21.07.2020
(51) Int. Cl.: B66B 13/14, B66B 19/00

(54) **ELEVATOR DOOR CONTROL**
AUFZUGSTÜRSTEUERUNG
COMMANDE DE PORTE D'ASCENSEUR

(43) Date of publication of application: 31.05.2023
(73) Proprietor: KONE Corporation, 00330 Helsinki (FI)
(72) Inventor: PARAMASIVAM, Nivas, Chennai, 600058 (IN); SARAVANAN, Krishnan, Chennai, 600058 (IN); PANDIAN, Goutham Saravana, Chennai, 600058 (IN)
(74) Representative: Berggren Oy
(86) International application number: PCT/FI2020/050498
(87) International publication number: WO 2022/018321

(56) References cited:
- US-B2- 9 758 351
- No further relevant documents disclosed

## Description

### TECHNICAL FIELD

The example and non-limiting embodiments of the present invention relate to controlling and/or monitoring operation of a door of an elevator.

### BACKGROUND

Correct operation of elevator doors is an important aspect in terms of safety and convenience of elevator passengers. In particular, timely opening the doors to enable passengers to enter and exit an elevator car plays an important role in avoiding undue delays in passenger transport, while keeping the doors open only when the elevator car is in a position that ensures safe entry thereto and exit therefrom is critical in terms of passenger safety.

In many elevator systems the elevator doors are automatically operated such that opening and closing the elevator doors is carried out via using a driving system that comprises an electric motor arranged to drive movement of the elevator doors under control of an elevator door controller. Since elevator cars and elevator doors are manufactured in a multitude of different sizes in accordance with the requirements of their specific usage environments, the driving system and/or the elevator door controller need to be configured for each elevator car separately in order to ensure reliable, efficient and safe operation. However, configuration of the elevator door controller typically requires manual work and/or usage of hardware dedicated to the configuration procedure, which may introduce additional cost in manufacturing and installing the elevator system while also making the configuration procedure prone to errors.

In related art, US 9,758,351 B2 discloses an elevator door control device that includes: a car door panel and a hall door panel that open/close, respectively; a motor that drives the car door panel to open/close; jointing means for mechanically jointing the car door panel and the hall door panel to each other so that the panels open/close in an integrated manner; a closer device that provides a self-closing force in a door close direction to the hall door panel, and controller controlling the motor. The controller includes a torque detection unit that detects a torque of the motor in at least one of door closing and door opening of the panels when the panels are jointed to each other, and a diagnosis unit determines whether or not the hall door panel can self-close via the self-closing force when the panels are not jointed to each other, based on the torque detected by the torque detection unit.

### SUMMARY

It is an object of the present invention to provide a technique that facilitates configuring and/or monitoring operation of an elevator car door in a flexible but yet reliable and cost-effective manner.

According to a first aspect of the invention, an apparatus for controlling operation of an elevator car door according to claim 1, via operating a door driving system arranged to drive movement of the car door between first and second end positions of its movement range is provided, wherein the door driving system comprises an electric motor that is coupled to the car door via a transmission system and wherein, the elevator car comprises a door coupler connected to the car door for temporarily coupling the car door to a landing door when the elevator car resides in a landing zone of a landing such that the landing door moves between a closed position and an open position together with the car door is provided, the apparatus configured to: control movement of the car door, monitor one or more parameters that are descriptive of power consumption of said electric motor upon movement of the car door, and carry out a configuration procedure comprising: recording a first power consumption profile that is descriptive of the power consumption of said electric motor as a function of the car door position when the car door is moved from the first end position to the second end position, recording a second power consumption profile that is descriptive of the power consumption of said electric motor as a function of the car door position when the car door is moved from the second end position to the first end position, and designating one of the first and second end positions as a closed door position and the other one of the first and second end positions as an open door position based on one or more characteristics of the first and second power consumption profiles.

According to a second aspect of the invention, a method for controlling operation of an elevator car door according to claim 14, via operating a door driving system is provided, wherein the car door is arranged in the elevator car and where the door driving system is arranged to drive movement of the car door between first and second end positions of its movement range, wherein the door driving system comprises an electric motor that is coupled to the car door via a transmission system and wherein, the elevator car comprises a door coupler connected to the car door for temporarily coupling the car door to a landing door when the elevator car resides in a landing zone of a landing such that the landing door moves between a closed position and an open position together with the car door is provided, the method comprising: monitoring one or more parameters that are descriptive of power consumption of said electric motor upon movement of the car door; recording a first power consumption profile that is descriptive of the power consumption of said electric motor as a function of the car door position when the car door is moved from the first end position to the second end position; recording a second power consumption profile that is descriptive of the power consumption of said electric motor as a function of the car door position when the car door is moved from the second end position to the first end position, and designating one of the first and second end positions as a closed door position and the other one of the first and second end positions as an open door position based on one or more characteristics of the first and second power consumption profiles.

According to a third aspect of the invention, a computer program according to claim 15 is provided, the computer program comprising computer readable program code configured to cause performing at least the method according to the example embodiment described in the foregoing when said program code is executed on one or more computing apparatuses.

The computer program according to the above-described example embodiment may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1 schematically illustrates some aspects of an elevator system according to an example;
Figure 2 illustrates a block diagram of some logical elements of an elevator control system according to an example;
Figure 3A schematically illustrates a reference power consumption profile according to an example;
Figure 3B schematically illustrates a reference power consumption profile according to an example;
Figure 4 illustrates a method according to an example; and
Figure 5 schematically illustrates an apparatus according to an example.

### DESCRIPTION OF SOME EMBODIMENTS

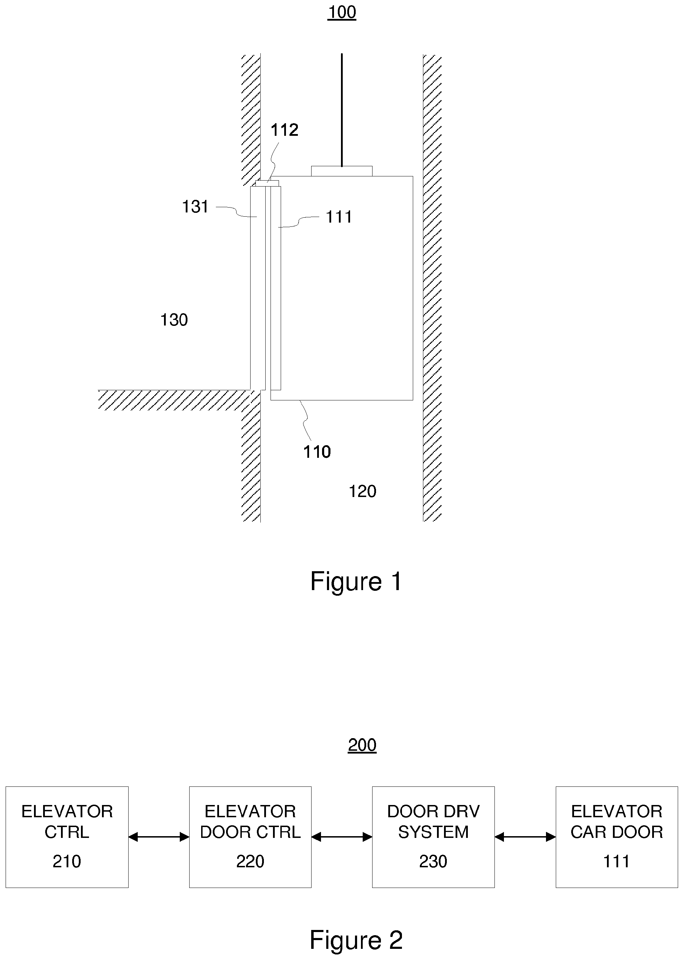

Figure 1 schematically illustrates some aspects of an elevator system 100 provided with automatic doors according to an example, including an elevator car 110 that may be moved in the vertical direction within an elevator shaft 120. The elevator car 110 may be provided with a car door 111, wherein the car door 111 comprises a sliding door that may be moved between a closed position and an open position. The car door 111 may be kept locked while the elevator car 110 is moving, unlocked upon the elevator car 110 entering a landing zone located at and close to a landing 130 and opened upon the elevator car 110 stopping at the landing 130. In contrast, the elevator car door 111 may be closed before the elevator car 110 leaves the landing 130 and locked upon the elevator car 110 exiting the landing zone. Moreover, the elevator car 110 is provided with a door coupler 112 connected to the car door 111 for temporarily coupling the car door 111 to a landing door 131 of the landing 130 when the elevator car 110 resides within the landing zone of the landing 130 such that landing door moves between a closed position and an open position together with the car door 111, thereby allowing passengers to move between the landing 130 and the elevator car 110 when the elevator car 110 is at the landing 130 while preventing the passengers from entering the elevator shaft 120 when the elevator car 110 is not at the landing 130.

The door coupler 112 may comprise coupling elements that engage corresponding counter elements in the landing door 131 when the elevator car 110 resides within the landing zone of the landing 130. In this regard, the coupling elements in the door coupler 112 and the counter elements in the landing door 131 are positioned with respect each other such that, when the elevator car 110 is moving past the landing door 131, the coupling elements are passed between the coupling elements. When the elevator car 110 is at the landing 130 and the car door 111 is moved in order to open the car door 111, the door coupler 112 in the elevator car 110 engages the counter elements in the landing door 131 and, consequently, when the car door 111 is moved by a door driving system arranged in the elevator car 110, the landing door 131 moves together with the car door 111.

As an example, the coupling elements may comprise sheet-metal vanes projecting from the door coupler 112 towards the landing door 131, where the vanes arranged such that they form a vertical 'slot' that has its open end directed towards the landing door 131, whereas the counter elements may comprise one or more rollers mounted on the landing door 131 in a position projecting from the landing door 131 towards the elevator shaft 120, the axis of the one or more rollers being substantially perpendicular to the plane of the landing door 131. The door coupler 112 and/or the car door 111 may be further provided with a locking device that closes or locks the car door 111 in such manner that the car door 111 cannot be opened without special measures when the elevator car 111 is outside the landing zone. In other words, the locking device may enable opening the car door 111 (without special measures) only when the elevator car 110 is within the landing zone and hence the car door 111 is substantially vertically aligned with the landing door 131. The locking device may comprise a mechanical or electromechanical locking arrangement.

Figure 2 illustrates a block diagram of some logical elements of an elevator control system 200 according to an example. The elevator control system 200 may serve to control various aspect related to movement and operation of the elevator car 110. In this example, the elevator control system 200 is shown with an elevator controller 210 for controlling at least some aspects of movement of the elevator car 110 in the elevator shaft 120, a door driving system 230 for driving movement of the car door 111 of the elevator car 110 between a closed position and an open position; and a door controller 220 for operating the door driving system 230 and for monitoring at least one aspect of operation of the door driving system 230.

Along the lines described in the foregoing, the elevator controller 210 may be arranged to control at least some aspects of movement of the elevator car 110 in the elevator shaft 120. The elevator control in this may involve, for example, controlling the speed of the elevator car 110 via control of one or more electric motors arranged to drive the elevator car 110 and braking system arranged to regulate the speed of the elevator car 110. In context of the present invention an aspect of interest is the operation of the door controller 220 and, consequently, any aspects related to general operation of the elevator controller 210 in controlling movement of the elevator car 110 may be provided using techniques known in the art. Therefore, any further details pertaining to the operation of the elevator controller 210 and/or movement of the elevator car 110 along the elevator shaft 120 are described herein only to extent they are necessary for describing examples that pertain to operation of the door controller 220.

The elevator controller 210 is typically installed outside the elevator car 110, for example in suitable location in the elevator shaft 120 or in its close proximity, and it may comprise or may be provided using one or more computing devices comprising respective one or more processors arranged to execute one or more computer programs to provide at least some aspects of operation of the elevator controller 210. Hence, the elevator controller 210 may be provided as an elevator control apparatus (e.g. using a single computer apparatus) or as an elevator control system (e.g. using one or more computer apparatuses). The elevator controller 210 is communicatively coupled to the door controller 220, where the communicative coupling between the elevator controller 210 and the door controller 220 may be provided using a wired communication network or communication link, using a wireless communication network or communication link, or using a combination of a wireless communication network or communication link and a wireless communication network or communication link.

The elevator controller 210 may be further communicatively coupled to one or more further elevator controllers that arranged for controlling at least some aspect of movement of respective elevator cars in other elevator shafts and/or to an elevator group controller arranged to control at least some aspects related to movement of a plurality of elevator cars in a plurality of elevator shafts.

Along the lines described in the foregoing, the door driving system 230 may be arranged to drive movement of the car door 111 between the closed position and the open position. In this regard, the door driving system 230 may operate under control of the door controller 220, e.g. in accordance with one or more door control signals received from the door controller 220. The door driving system 230 may comprise an electric motor and a motor controller arranged to control operation of the electric motor that is coupled to the car door 111 via a transmission system such that operation of the electric motor causes linear movement of the elevator car door 111 in a direction that is substantially parallel with an opening in a wall of the elevator shaft 120 at the landing 130, thereby enabling movement of the car door 111 between the closed and open positions. The transmission system may be arranged to convert the rotary motion provided by the electric motor into the linear movement of the car door 111. Characteristics of the transmission system may be selected in accordance with requirements of a specific implementation of the elevator car 110, the car door 111 and/or the door driving system 230, and the transmission system may involve, for example, one or more of the following: a belt drive, a chain drive, a gear train, etc.

Along the lines described in the foregoing, the door controller 220 may be arranged to control operation of the door driving system 230, thereby enabling controlling the movement of the car door 111 between the closed and open positions. The door controller 220 may be further arranged to monitor at least one aspect of operation of the door driving system 230. The door controller 220 is typically installed in the elevator car 110, for example in suitable location in the interior of the elevator car 110 (e.g. in a ceiling structure of the elevator car 110) or on the exterior of the elevator car 110 (e.g. on the roof of the elevator car 110).

The door controller 220 may comprise or may be provided using a computing device comprising one or more processors arranged to execute one or more computer programs to provide at least some aspects of operation of the door controller 220. Hence, the door controller 220 may be provided as a door controller apparatus. Along the lines described in the foregoing, the door controller 220 is communicatively coupled to the elevator controller 210, whereas the door controller 220 is further communicatively coupled to the door driving system 230, where the communicative coupling between the door controller 220 and the door driving system 230 may be provided using a wired or wireless communication network and/or communication link.

The aspect of the door controller 220 controlling the movement of the car door 111 between the closed and open positions may comprise at least the following operations with respect to moving the elevator car door 111:
- move the car door 111 in a first direction,
- move the car door 111 in a second direction that is opposite of the first direction.

Each of these operations may be effected via the door controller 220 issuing a respective control signal to the door driving system 230. The door controller 220 may further enable, for example, setting and/or adjusting movement speed of the car door 111 via application of a respective control signal.

The aspect of the door controller 220 monitoring at least one aspect of operation of the door driving system 230 may comprise monitoring one or more parameters that are descriptive of power consumption of the electric motor of the door driving system 230. As an example in this regard, the door controller 220 may be able to directly monitor or measure the power consumption of the electric motor of the door driving system 230, whereas in another example the door controller 220 may be able to monitor one or more parameters that are indirectly descriptive of power consumption of the electric motor of the door driving system 230. As an example of the latter, the door controller 220 may be arranged to monitor one or more characteristics of the electric current and/or voltage supplied to the electric motor of the door driving system 230, e.g. the magnitude and/or phase of the electric current supplied to the electric motor. Monitoring of the electric current and/or voltage may comprise obtaining respective indications of characteristics of the electric current and/or voltage supplied to the electric motor from the motor controller or using respective measurement arrangements for obtaining respective indications of characteristics of the electric current and/or voltage supplied to the electric motor.

The door controller 220 may further enable monitoring a position of a component of the transmission system of the door driving system 230, which position is at least indirectly indicative of the (relative) position of the car door 111. As an example in this regard, in case the transmission system of the door driving system 230 comprises a belt drive assembly, the measure of interest may comprise a position of (a predefined reference point in) a driving belt of the belt drive assembly and/or the traveling distance of the driving belt between the closed and open positions of the car door 111.

The aspect of the door controller 220 may monitoring of at least one aspect of operation of the door driving system 230 may comprise the door controller 220 reading or receiving the one or more parameters that are descriptive of the power consumption of the electric motor of the door driving system 230, possibly together with the position of the component of the transmission system of the door driving system 230, according to a predefined schedule, e.g. at predefined time intervals. As an example in this regard, predefined time interval may be chosen from the range from 10 to 100 milliseconds, e.g. 50 milliseconds.

Upon manufacturing and installation to the elevator car 110, the door controller 220 may lack knowledge of the type of the car door 111, the size (e.g. width) of the car door 111 and/or any position reference pertaining to the car door 111 and, consequently, the door controller 220 may initially lack knowledge required for detecting the current position of the car door 111. In particular, the door controller 220 may initially lack knowledge regarding which one of the end positions of the movement range of the car door 111 represents the closed position and which one represent the open position. An advantage arising from such a manner of providing the door controller 220 is that the same or similar door controller 220 is applicable for any car door 111 regardless of the design of the car door 111 and its arrangement with respect to the elevator car 110, while on the other hand such an approach requires configuration of the door controller 220 upon configuring or reconfiguring the elevator car 110 for use in order to enable proper operation of the door controller 220.

In this regard, the elevator door controller 220 may be arranged to carry out a configuration procedure to derive position reference data that may be subsequently applied in controlling the door movement in the course of operation of the elevator system 100. The position reference obtained via the configuration procedure may comprise an indication which one of the end positions of the movement range of the car door 111 represents the closed position and which one represents the open position. The position reference data may further comprise a first reference position for a component of the transmission system of the elevator door driving system 230 and a second reference position for said component of the transmission system of the elevator door driving system 230, where one of the first and second reference positions may represent the closed position (e.g. a closed end) of the car door 111 and the other one of the first and second reference positions may represent the open position (e.g. an open end) of the car door 111. Alternatively or additionally, the position reference data may comprise a reference position for said component of the transmission system of the elevator door driving system 230 and a reference distance, where the reference position may represent one of the closed and open positions of the car door 111 and the reference distance may represent the deviation in the position of said component of the transmission system of the elevator door driving system 230 between the closed and open positions of the car door 111. Derivation of the position reference data according to technique described in the present invention provides a reliable and repeatable manner of configuring, reconfiguring and monitoring the operation of the car door 111 without a need to apply any physical components that are dedicated for the configuration procedure.

The power consumption of the electric motor of the door driving system 230 varies with the position of the car door 111 due to changes in load of the electric motor in the course of moving the car door from a first end position to a second end position of its movement range, where one of the first and second end positions represents the closed position of the car door 111 and the other one of the first and second end positions represents the open position of the car door 111. In particular, the load of the electric motor temporarily increases due an additional load resulting from operation of the door coupler 112 (e.g. due to the coupling elements of the door coupler 112 in the car door 111 engaging the counter elements of the landing door 131) while the load of the electric motor increases significantly when the car door 111 is moved to end position of its movement range from which it cannot move any further. In the following, a curve that is descriptive of the power consumption of the electric motor of the door driving system 230 as a function of the car door position while moving the car door 111 from one of the first and second end position to the other one is referred to as a power consumption profile.

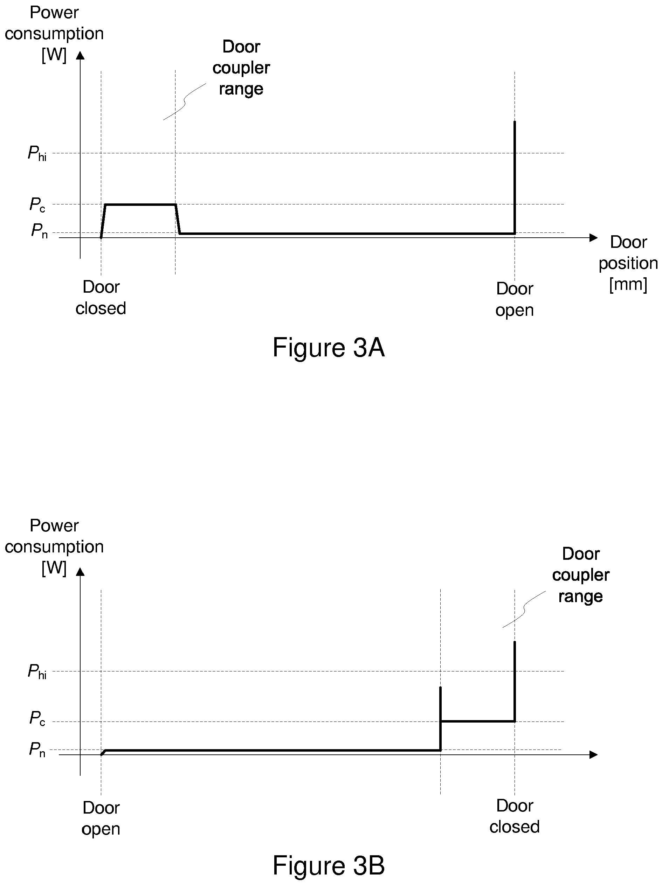

The configuration procedure may be based on recording respective power consumption profiles while moving the car door 111 between the end positions of its movement in both directions. In particular, the configuration procedure may rely on comparing one or more characteristics of the recorded power consumption profiles to respective characteristics of one or more reference power consumption profiles. The reference power consumption profiles may reflect one or more characteristic of the arrangement between the door driving system 230, the car door 111, the landing door 131 and the door coupler 112. As non-limiting examples in this regard, Figure 3A schematically depicts a first reference power consumption profile that represents the power consumption of the electric motor as a function of the door position when moving the car door 111 from the closed position to the open position, whereas Figure 3B schematically depicts a second reference power consumption profile that represents the power consumption of the electric motor as a function of the door position when moving the car door 111 from the open position to the closed position.

In the first reference power consumption profile, upon starting the car door 111 movement, the power consumption of the electric motor initially rises to and remains at an intermediate power consumption level *P*_{c} due to an additional load resulting from operation of the door coupler 112 (designated as "door coupler range" in the illustration of Figures 3A and 3B). After the door coupler range, the force required for moving the car door 111 decreases and, consequently, the power consumption of the electric motor decreases to and remains at a baseline (or nominal) power consumption level *P*ₙ until the car door 111 has been moved to the fully open position, which results in steeply increasing power consumption of the electric motor (e.g. a power consumption peak) due to the car door 111 having reached the end position of its movement range.

In the second reference power consumption profile, upon starting the car door 111 movement, the power consumption of the electric motor initially remains at the baseline power consumption level *P*ₙ until the car door 111 has been moved to the door coupler range. Upon entering the door coupler range, the load resulting from operation of the door coupler 112 causes the power consumption of the electric motor to rise to and remain at the intermediate power consumption level *P*_{c} until the car door 111 has been moved to the fully closed position, which results in steeply increasing power consumption of the electric motor (e.g. a power consumption peak) due to the car door 111 having reached the end position of its movement range. In the second reference power consumption profile, the entry to the "door coupler range" may further result in a minor peak in the power consumption of the electric motor, as shown in the illustration of Figure 3B.

A further aspect that may have an effect on the power consumption of the electric motor upon moving the car door 111 may arise from a closing weight that may be coupled to the car door 111 and arranged such that it ensures closing the car door 111 in case loss of electric power (and hence inability of the door driving system 230 driving the movement of the car door 111): the closing weight may cause a minor increase in load of the electric motor when opening the door in comparison to closing the door. This may make the baseline power consumption level *P*ₙ in a power consumption profile pertaining to movement of the car door 111 from the closed position to the open position slightly higher than that that of a corresponding power consumption profile pertaining to movement of the car door 111 from the open position to the closed position.

The configuration procedure may comprise recording a first power consumption profile that is descriptive of the power consumed by the electric motor of the door driving system 230 as a function of the car door position when the car door 111 is moved from the first end position to the second end position and recording a second power consumption profile that is descriptive of the power consumed by the electric motor of the door driving system 230 as a function of the car door position when the car door 111 is moved from the second end position to the first end position. In this regard, configuration procedure may comprise operating the door driving system 230 to move the car door 111 from the first end position to the second end position and to move the car door 111 from the second end position to the first end position while measuring the one or more parameters that are descriptive of the power consumption of the electric motor in order to, respectively, record the first and second power consumption profiles. In this regard, the movement towards the first or the second direction may be continued until the power consumption of the electric motor exceeds a predefined peak power threshold *P*ₕᵢ (see also Figures 3A and 3B in this regard), which may be considered as an indication of the car door 111 having reached the respective end position of its movement range.

The configuration procedure may further comprise tracking or monitoring the position of a component of the transmission system of the door driving system 230 that at least indirectly represents the (relative) position of the car door 111 while moving the car door 111 from the first end position to the second end position and/or vice versa. Consequently, the configuration procedure may comprise recording the first reference position as the position of said component of the transmission system when the car door 111 is positioned at the first end position of its movement range and/or recording the second reference position as the position of said component of the transmission system when the car door 111 is positioned at the second end position of its movement range. Alternative or additionally, the configuration procedure may further comprise recording the reference distance between respective positions of said component of the transmission system between the first and second end positions of the movement range of the car door 111.

Along the lines described in the foregoing, in an example, the power consumption of the electric motor may be represented by one or more characteristics of the electric current and/or voltage supplied to the electric motor of the door driving system 230, e.g. by the magnitude of the electric current supplied to the electric motor. In such an example, the first and second power consumption profiles may comprise respective current profiles that are descriptive of the magnitude of the electric current supplied to the electric motor of the door driving system 230 as a function of the car door position between the first and second end positions of its movement range. Further along the lines described in the foregoing, in an example, the transmission system may comprise a belt drive and the first and second reference positions may comprise respective positions of (a predefined reference point in) the driving belt of the belt drive assembly and/or the reference distance may comprise the traveling distance of the driving belt between the closed and open positions of the car door 111.

As described in the foregoing, the elevator door controller 220 may not have the knowledge regarding which one of the first and second end positions represents the closed position of the car door 111 and which one represents the open position of the car door 111. In this regard, the configuration procedure may comprise designating one of the first and second end positions as the closed door position and designating the other one of the first and second end positions as the open door position based on the first and second recorded power consumption profiles.

The designation may rely on one or more characteristics of the first and second recorded power consumption profiles in view of one or more characteristics of reference power consumption profiles that represent the power consumption of the electric motor as a function of the door position, e.g. the ones according to the examples illustrated in Figures 3A and 3B. In this regard, the designation may consider the first and second recorded power consumption profiles in their entirety or it may consider a certain portion in the first and second recorded power consumption profiles. In this regard, the designation may comprise identifying a respective door coupler range in each of the first and second recorded power consumption profiles and carrying out the designation in dependence of one or more characteristics of the respective door coupler ranges identified in the first and second recorded power consumption profiles. In this regard, the door coupler range may be identified as a sub-portion of the power consumption profile that exhibits a continuous period of increased power consumption that meets one or more predefined door coupler range criteria, e.g. one or more of the following:
- the power consumption is at least a first predefined margin above the baseline power consumption level but below the predefined peak power threshold *P*ₕᵢ;
- the sub-portion covers at least a predefined traveling distance of the car door 111.

Non-limiting examples of using one or more characteristics of the respective door coupler ranges identified in the first and second recorded power consumption profiles in the designation in consideration of the first and second recorded power consumption profiles in their entirety or at least in a major part include the following:
- The first end position may be designated as the closed end position and the second end position may be designated as the open end position in response to the respective identified door coupler range appearing in the beginning of the first recorded power consumption profile and in at the end of the second recorded power consumption profile.
- The second end position may be designated as the closed end position and the first end position may be designated as the open end position in response to the respective identified door coupler range appearing in the beginning of the second recorded power consumption profile and in at the end of the first recorded power consumption profile.

In further examples, additionally or alternatively, the designation may consider a certain sub-portion of the first and second recorded power consumption profiles, e.g. the respective door coupler ranges identified in the first and second recorded power consumption profiles. Non-limiting examples in this regard include the following:
- The first end position may be designated as the closed end position and the second end position may be designated as the open end position in response to the door coupler range identified in the second recorded power consumption profile terminating to a power consumption peak and the door coupler range identified in the first recorded power consumption profile not terminating to a power consumption peak.
- The second end position may be designated as the closed end position and the first end position may be designated as the open end position in response to the door coupler range identified in the first recorded power consumption profile terminating to a power consumption peak and the door coupler range identified in the second recorded power consumption profile not terminating to a power consumption peak.

In this regard, a presence of a power consumption peak may be identified via usage of one or more predefined peak criteria, e.g. one or more of the following:
- the power consumption is at least a second predefined margin above the baseline, where the second predefined margin is larger than the first predefined margin;
- the power consumption exceeds the predefined peak power threshold *P*ₕᵢ.

Hence, the designation of one of the first and second end positions as the closed door position and designation of the other one as the open door position provides the door controller 220 with the knowledge of which one of the first and second end positions of the movement range of the car door 111 represents the closed position and which one represents the open position. This information may be stored in a memory available in or otherwise accessible by the door controller 220 for subsequent use in the course of operation of the elevator system 100. Moreover, the door controller 220 may further transmit an acknowledgement regarding the designation having been successfully completed to the elevator controller 210.

As described in the foregoing, the configuration procedure may comprise tracking or monitoring the position of a component of the transmission system of the door driving system 230 and recording the first reference position as the position of said component of the transmission system when the car door 111 is at the first end position of its movement range and/or recording the second reference position as the position of said component of the transmission system when the car door 111 is at the second end position of its movement range, possibly together with a reference distance that between said first and second reference positions.

With the above-described designation of one of the first and second end positions of the car door 111 as the closed position and the other one as the open position, the door controller 220 may further associate the first and/or second reference positions to the closed position of the car door 111 or to the open position of the car door 111 accordingly: in case the first end position of the car door 111 has been found to represent the closed position of the car door 111 (and, conversely, the second end position has been found to represent the open position of the car door 111), the first reference position indicates the position of said component of the transmission system when the car door 111 is closed and the second reference position indicates the position of said component of the transmission system when the car door 111 is open, whereas in case the second end position of the car door 111 has been found to represent the closed position of the car door 111 (and, conversely, the first end position has been found to represent the open position of the car door 111), the second reference position indicates the position of said component of the transmission system when the car door 111 is closed and the first reference position indicates the position of said component of the transmission system when the car door 111 is open.

Consequently, the door controller 220 may operate the car door 111 in accordance with the first and/or second reference positions, possibly in view of the reference distance between the first and second reference positions, e.g. such that one of the first and second reference positions serves as an indication of the closed position of the car door 111 position while the other one serves as an indication of the open position of the car door 111.

The door controller 220 may be arranged to initiate the configuration procedure in response to a command received from the elevator controller 210, in response to command from an external (computing) device coupled to the elevator controller 210, or in response to a command received via a user interface provided in the elevator car 110. Regardless of manner of initiating the configuration procedure, this function is to be made accessible only by maintenance personnel.

Once initiated, the door controller 220 may be arranged to carry out the configuration procedure a predefined number of times in order to ensure correct designation of the first and second end positions of the movement range of the car door 111 as the closed door position and the open door position and, possibly, to ensure correctly setting the first and second reference positions for the component of the transmission system of the door driving system 230. In particular, successful completion of the configuration procedure may require that the configuration procedure described in the foregoing is carried the predefined number of times with the same outcome with respect to designation of the first and second end positions of the movement range of the car door 111 as the closed door position and the open door position in response to a command received from the elevator controller 210 and, if applicable, with the substantially same outcome with respect the first and second reference positions.

In the foregoing, the description refers to the car door 111 in singular. However, the description readily generalizes into controlling operation of at least one car door 111 of the elevator car 110 and, consequently, the technique described in the present invention is equally applicable, for example, to a single car door 111 opening to the left, a single car door 111 opening to the right, and to a double doors 111 that comprises respective door leaves opening to the left and to the right. In the latter example, the same electric motor and transmission system of the door driving system 230 may be applied for driving the movement of the both door leaves. In case the elevator car 110 comprises two or more independent car doors that are driven by respective separate door driving systems 230, e.g. respective car doors 111 in both ends of the elevator car 110, the door controller 220 may carry out the above-described configuration procedure separately for each of the car doors 111.

Standards related to safety of elevator transport require that the elevator car 110 is not allowed to travel unless the car door 111 is fully closed. As an example, closed status of the car door 111 may be provided via usage of a safety switch arranged in the car door 111 that closes a safety chain when the car door 111 is fully closed and consequently issues a monitoring signal, which may be delivered to the elevator controller 210 as a primary car door closed signal to provide an indication of the car door 111 being duly closed.

In some situations, such as maintenance operations carried out to the elevator system 100, it may be necessary to bypass the safety switch, thereby disconnecting the safety chain. In such situations there may be still a need to move the elevator car 110 up or down, whereas safety regulations nevertheless prohibit the elevator controller 220 moving the elevator car 110 without an indication of the car door 111 being fully closed. For such a situation the elevator controller 210 may allow movement of the elevator car 110 in response to receiving a secondary car door closed signal from the door controller 220, which is secondary car door closed signal is derived using a mechanism that is substantially independent from that applied in derivation of the primary car door closed signal. As an example in this regard, the door controller 220 may substantially continuously record the power consumption profiles resulting from movement of the car door 111 and consider a power consumption profile that ends with the door coupler range and/or a door coupler range within a power consumption profile that terminates with a power consumption peak as an event that may trigger transmission of the secondary car door closed signal to the elevator controller 210. As another example, alternatively or additionally, the door controller 220 may consider the component of the transmission system reaching the one of the first and second reference positions that is associated with the closed door position as an event that may trigger transmission of the secondary car door closed signal to the elevator controller 210.

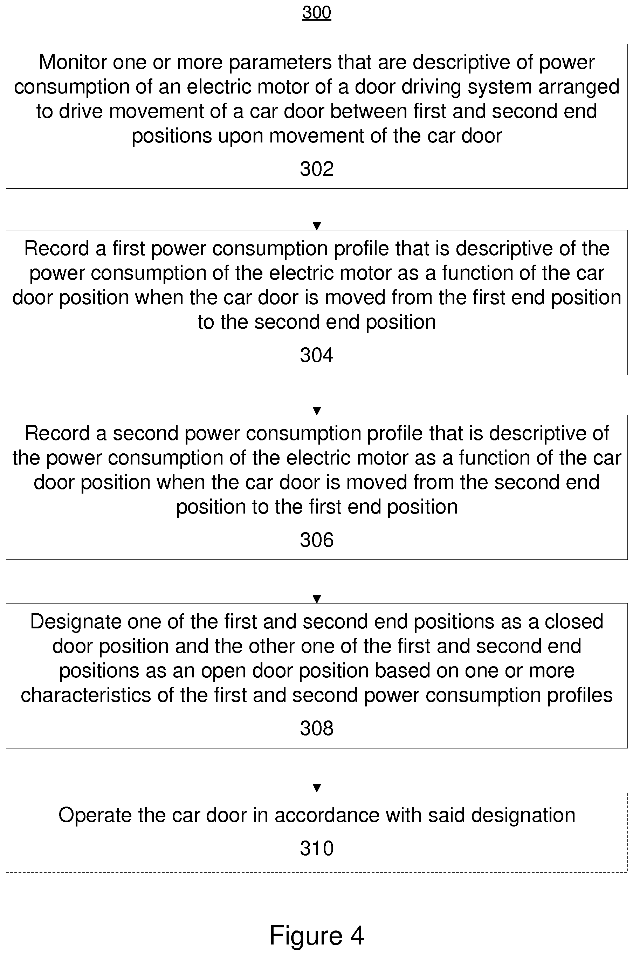

The operations pertaining to operation of the door controller 220 with respect to carrying out the configuration procedure may be described as steps of a method. As an example in this regard, Figure 4 depicts a flowchart illustrating a method 300, which may be implemented by the door controller 220, by a (computing) device coupled to the door controller 220, or by another entity of the elevator control system 200. The method 300 commences from monitoring one or more parameters that are descriptive of the power consumption of the electric motor of the door driving system 230 upon movement of the car door 110, as indicated in block 302. The method 300 further comprises recording the first power consumption profile that is descriptive of the power consumption of said electric motor as a function of the car door position when the car door 111 is moved from the first end position to the second end position, as indicated in block 304, and recording the second power consumption profile that is descriptive of the power consumption of said electric motor as a function of the car door position when the car door 111 is moved from the second end position to the first end position, as indicated in block 306. The method 300 further comprises designating one of the first and second end positions as the closed door position and the other one of the first and second end positions as the open door position based on one or more characteristics of the first and second power consumption profiles, as indicated in block 308. The method 300 may further comprise operating the car door 111, after completion of the configuration procedure, in accordance with said designation, as indicated in block 310. Respective operations described with references to blocks 302 to 310 pertaining to the method 300 may be implemented, varied and/or complemented in a number of ways, for example as described with references to the door controller 220, to other elements of the elevator control system 200 and/or to another element of the elevator system 100.

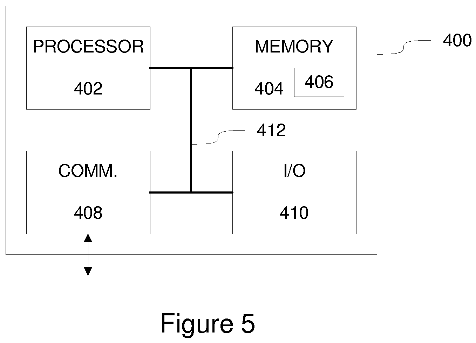

Along the lines described in the foregoing, the door controller 220 may comprise or may be provided using one or more computing devices comprising respective one or more processors arranged to execute one or more computer programs to provide at least some aspects of operation of the door controller 220. As an example in this regard, the operation of the door controller 220 may be provided by a door controller apparatus or by an apparatus arranged to operate as the door controller 220. Figure 5 schematically illustrates some components of an apparatus 400 that may be employed to implement such an apparatus.

The apparatus 400 comprises a processor 410 and a memory 420. The memory 420 may store data and computer program code 425. The apparatus 400 may further comprise communication means 430 for wired or wireless communication with other apparatuses and/or user I/O (input/output) components 440 that may be arranged, together with the processor 410 and a portion of the computer program code 425, to provide the user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 400 are communicatively coupled to each other via a bus 450 that enables transfer of data and control information between the components.

The memory 420 and a portion of the computer program code 425 stored therein may be further arranged, with the processor 410, to cause the apparatus 400 to perform at least some aspects of operation of the door controller 220 described in the foregoing. The processor 410 is configured to read from and write to the memory 420. Although the processor 410 is depicted as a respective single component, it may be implemented as respective one or more separate processing components. Similarly, although the memory 420 is depicted as a respective single component, it may be implemented as respective one or more separate components, some or all of which may be integrated/removable and/or may provide permanent / semi-permanent/ dynamic/cached storage.

The computer program code 425 may comprise computer-executable instructions that implement at least some aspects of operation of the door controller 220 described in the foregoing when loaded into the processor 410. As an example, the computer program code 425 may include a computer program consisting of one or more sequences of one or more instructions. The processor 410 is able to load and execute the computer program by reading the one or more sequences of one or more instructions included therein from the memory 420. The one or more sequences of one or more instructions may be configured to, when executed by the processor 410, cause the apparatus 400 to perform at least some aspects of operation of the door controller 220 described in the foregoing. Hence, the apparatus 400 may comprise at least one processor 410 and at least one memory 420 including the computer program code 425 for one or more programs, the at least one memory 420 and the computer program code 425 configured to, with the at least one processor 410, cause the apparatus 400 to perform at least some aspects of operation of the door controller 220 described in the foregoing.

The computer program code 425 may be provided e.g. a computer program product comprising at least one computer-readable non-transitory medium having the computer program code 425 stored thereon, which computer program code 425, when executed by the processor 410 causes the apparatus 400 to perform at least some aspects of operation of the door controller 220 described in the foregoing. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. An apparatus (220) for controlling operation of a car door (111) arranged in an elevator car (110) via operating a door driving system (230) arranged to drive movement of the car door (111) between first and second end positions of its movement range, wherein the door driving system (230) comprises an electric motor that is coupled to the car door (111) via a transmission system and wherein, the elevator car (111) comprises a door coupler (112) connected to the car door (111) for temporarily coupling the car door (111) to a landing door (131) when the elevator car (110) resides in a landing zone of a landing (130) such that the landing door (131) moves between a closed position and an open position together with the car door (111),
wherein the apparatus (220) is arranged to control movement of the car door (111) and monitor one or more parameters that are descriptive of power consumption of said electric motor upon movement of the car door (111),
wherein the apparatus (220) is arranged to carry out a configuration procedure comprising:
recording a first power consumption profile that is descriptive of the power consumption of said electric motor as a function of the car door (111) position when the car door (111) is moved from the first end position to the second end position,
recording a second power consumption profile that is descriptive of the power consumption of said electric motor as a function of the car door (111) position when the car door (111) is moved from the second end position to the first end position, and **characterized by**
designating one of the first and second end positions as a closed door position and the other one of the first and second end positions as an open door position based on one or more characteristics of the first and second power consumption profiles.

2. An apparatus (220) according to claim 1, wherein carrying out the configuration procedure comprises:
the apparatus (220) controlling the door driving assembly (230) to move the car door (111) from the first end position to the second end position to capture the first power consumption profile; and
the apparatus (220) controlling the door driving assembly (230) to move the car door (111) from the second end position to the first end position to capture the second power consumption profile.

3. An apparatus (220) according to claim 2, wherein carrying out the configuration procedure comprises:
the apparatus (220) controlling the door driving assembly (230) to move the car door (111) from the first end position towards the second end position until the power consumption of said electric motor exceeds a predefined peak power threshold; and
the apparatus (220) controlling the door driving assembly (230) to move the car door (111) from the second end position towards the first end position until the power consumption of said electric motor exceeds the predefined peak power threshold.

4. An apparatus (220) according to any of claims 1 to 3, wherein said designation comprises:
identifying, in each of the first and second recorded power consumption profiles, a respective door coupler range as sub-portion of the respective recorded power consumption profile that exhibits a continuous period of increased power consumption; and
designating one of the first and second end positions as the closed door position and the other one of the first and second end positions as the open door position in dependence of one or more characteristics of the respective door coupler ranges identified in the first and second recorded power consumption profiles.

5. An apparatus (220) according to claim 4, wherein identification of the door coupler range in a power consumption profile comprises identifying a sub-portion of the respective power consumption profile that exhibits a continuous period of increased power consumption that meets one or more of the following door coupler range criteria:
the power consumption is at least by a first predefined margin above a baseline power consumption indicated in the respective power consumption profile but the power consumption does not exceed a predefined peak power threshold,
said sub-portion covers at least a predefined traveling distance of the car door (111).

6. An apparatus (220) according to claim 4 or 5, wherein said designation comprises:
designating the first end position as the closed door position and the second end position as the open door position in response to the respective identified door coupler range appearing in the beginning of the first recorded power consumption profile and in at the end of the second recorded power consumption profile,
designating the second end position as the closed door position and the first end position as the open door position in response to the respective identified door coupler range appearing in the beginning of the second recorded power consumption profile and in at the end of the first recorded power consumption profile.

7. An apparatus (220) according to any of claims 4 to 6, wherein said designation comprises:
designating the first end position as the closed end position and the second end position as the open end position in response to the door coupler range identified in the second recorded power consumption profile terminating to a power consumption peak and the door coupler range identified in the first recorded power consumption profile not terminating to a power consumption peak,
designating the second end position may as the closed end position and the first end position as the open end position in response to the door coupler range identified in the first recorded power consumption profile terminating to a power consumption peak and the door coupler range identified in the second recorded power consumption profile not terminating to a power consumption peak.

8. An apparatus (220) according to any of claims 1 to 7, wherein said one or more parameters that are descriptive of the power consumption of said electric motor comprise one or more characteristics of electric current and/or voltage supplied to said electric motor.

9. An apparatus (220) according to any of claims 1 to 8, further arranged to track position of a predefined component of said transmission system and wherein the configuration procedure further comprises:
recording a first reference position as the position of said component of the transmission system when the car door (111) is at the first end position and/or recording a second reference position as the position of said component of the transmission system when the car door (111) is at the second end position; and
associating one of the first and second reference positions to the closed door position and the other one to the open door position in accordance with the designation of the first and second end positions of the car door (111).

10. An apparatus (220) according to claim 9, wherein said predefined component of transmission system comprises a driving belt of a belt drive assembly.

11. An apparatus (220) according to claim 9 or 10, further arranged to issue a secondary door closed signal in response to the car door (111) being positioned in that one of the first and second reference positions associated with the closed door position.

12. An apparatus (220) according to any of claims 1 to 11, further arranged to:
record a further power consumption profile that is descriptive of the power consumption of said electric motor as a function of the car door (111) position when the car door (111) is moved from the first end position to the second end position;
identify, in the further power consumption profile, a respective door coupler range as sub-portion of the respective recorded power consumption profile that exhibits a continuous period of increased power consumption; and
issue a secondary door closed signal in response to one of the following:
the door coupler range appearing at the end of the further power consumption profile,
the door coupler range in the further power consumption profile terminating to a power consumption peak.

13. An elevator car (110) comprising:
a car door (111) arranged in the elevator car (110);
a door driving system (230) for driving movement of the car door (111) between a first and second end positions of its movement range, wherein the door driving system (230) comprises an electric motor that is coupled to the car door (111) via a transmission system;
a door coupler (112) connected to the car door (111) for temporarily coupling the car door (111) to a landing door (131) when the elevator car (110) resides in a landing zone of a landing (130) such that the landing door (131) moves between a closed position and an open position together with the car door (111); and
the apparatus (220) according to any of claims 1 to 12 arranged to control operation of the car door (111).

14. A method (300) for controlling operation of a car door (111) via operating a door driving system (230), wherein the car door (111) is arranged in an elevator car (110) and wherein the door driving system (230) is arranged to drive movement of the car door (111) between first and second end positions of its movement range, wherein the door driving system (230) comprises an electric motor that is coupled to the car door (111) via a transmission system, and wherein the elevator car (111) comprises a door coupler (112) connected to the car door (111) for temporarily coupling the car door (111) to a landing door (131) when the elevator car (110) resides in a landing zone of a landing (130) such that the landing door (131) moves between a closed position and an open position together with the car door (111), the method (300) comprising:
monitoring (302) one or more parameters that are descriptive of power consumption of said electric motor upon movement of the car door (111);
wherein the method (300) comprises:
recording a first power consumption profile that is descriptive of the power consumption of said electric motor as a function of the car door (111) position when the car door (111) is moved from the first end position to the second end position,
recording a second power consumption profile that is descriptive of the power consumption of said electric motor as a function of the car door (111) position when the car door (111) is moved from the second end position to the first end position, and **characterized by**
designating one of the first and second end positions as a closed door position and the other one of the first and second end positions as an open door position based on one or more characteristics of the first and second power consumption profiles.

15. A computer program comprising computer readable program code configured to cause performing of the method according to claim 14 when said program code is run on the apparatus (220) according to claims 1 to 12.

## Patentansprüche

1. Vorrichtung (220) zum Steuern des Betriebs einer in einer Aufzugskabine (110) angeordneten Kabinentür (111) durch Betreiben eines Türantriebssystems (230), das zum Antreiben einer Bewegung der Kabinentür (111) zwischen einer ersten und einer zweiten Endposition ihres Bewegungsbereichs angeordnet ist, wobei das Türantriebssystem (230) einen Elektromotor umfasst, der über ein Übertragungssystem mit der Kabinentür (111) gekoppelt ist, und wobei die Aufzugskabine (111) einen Türkoppler (112) umfasst, der mit der Kabinentür (111) verbunden ist, um die Kabinentür (111) vorübergehend mit einer Stockwerktür (131) zu koppeln, wenn sich die Aufzugskabine (110) in einer Stockwerkzone eines Stockwerks (130) befindet, so dass sich die Stockwerktür (131) zusammen mit der Kabinentür (111) zwischen einer geschlossenen Position und einer offenen Position bewegt,
wobei die Vorrichtung (220) dazu eingerichtet ist, die Bewegung der Kabinentür (111) zu steuern und einen oder mehrere Parameter zu überwachen, die den Stromverbrauch des Elektromotors bei Bewegung der Kabinentür (111) beschreiben,
wobei die Vorrichtung (220) dazu eingerichtet ist, ein Konfigurationsverfahren auszuführen, das Folgendes umfasst:
Aufzeichnen eines ersten Stromverbrauchsprofils, das den Stromverbrauch des Elektromotors als Funktion der Position der Kabinentür (111) beschreibt, wenn die Kabinentür (111) von der ersten Endposition in die zweite Endposition bewegt wird,
Aufzeichnen eines zweiten Stromverbrauchsprofils, das den Stromverbrauch des Elektromotors als Funktion der Position der Kabinentür (111) beschreibt, wenn die Kabinentür (111) von der zweiten Endposition in die erste Endposition bewegt wird, und **gekennzeichnet durch** das Bezeichnen einer der ersten und zweiten Endpositionen als geschlossene Türposition und der anderen der ersten und zweiten Endpositionen als offene Türposition, basierend auf einer oder mehreren Eigenschaften des ersten und zweiten Stromverbrauchsprofils.

2. Vorrichtung (220) nach Anspruch 1, wobei das Durchführen des Konfigurationsverfahrens Folgendes umfasst, wobei:
die Vorrichtung (220) die Türantriebsanordnung (230) steuert, um die Kabinentür (111) von der ersten Endposition in die zweite Endposition zu bewegen, um das erste Stromverbrauchsprofil zu erfassen; und
die Vorrichtung (220) die Türantriebsanordnung (230) steuert, um die Kabinentür (111) von der zweiten Endposition in die erste Endposition zu bewegen, um das zweite Stromverbrauchsprofil zu erfassen.

3. Vorrichtung (220) nach Anspruch 2, wobei das Durchführen des Konfigurationsverfahrens Folgendes umfasst, wobei:
die Vorrichtung (220) die Türantriebsanordnung (230) steuert, um die Kabinentür (111) von der ersten Endposition in Richtung der zweiten Endposition zu bewegen, bis der Stromverbrauch des Elektromotors einen vordefinierten Spitzenleistungsschwellenwert überschreitet; und
die Vorrichtung (220) die Türantriebsanordnung (230) steuert, um die Kabinentür (111) von der zweiten Endposition in Richtung der ersten Endposition zu bewegen, bis der Stromverbrauch des Elektromotors den vordefinierten Spitzenleistungsschwellenwert überschreitet.

4. Vorrichtung (220) nach einem der Ansprüche 1 bis 3, wobei die Bezeichnung Folgendes umfasst:
Identifizieren eines jeweiligen Türkupplungsbereichs als Teilbereich des jeweiligen aufgezeichneten Stromverbrauchsprofils, der einen kontinuierlichen Zeitraum erhöhten Stromverbrauchs aufweist, in jedem der ersten und zweiten aufgezeichneten Stromverbrauchsprofile; und
Bezeichnen einer der ersten und zweiten Endpositionen als geschlossene Türposition und der anderen der ersten und zweiten Endpositionen als offene Türposition in Abhängigkeit von einer oder mehreren Eigenschaften der jeweiligen Türkupplungsbereiche, die in den ersten und zweiten aufgezeichneten Stromverbrauchsprofilen identifiziert wurden.

5. Vorrichtung (220) nach Anspruch 4, wobei die Identifizierung des Türkupplungsbereichs in einem Stromverbrauchsprofil das Identifizieren eines Unterabschnitts des jeweiligen Stromverbrauchsprofils umfasst, der einen kontinuierlichen Zeitraum erhöhten Stromverbrauchs aufweist, der eines oder mehrere der folgenden Türkupplungsbereichskriterien erfüllt, wobei:
der Stromverbrauch mindestens um einen ersten vordefinierten Abstand über einem im jeweiligen Stromverbrauchsprofil angegebenen Basisstromverbrauch liegt, jedoch nicht einen vordefinierten Spitzenleistungsschwellenwert überschreitet,
der Unterabschnitt mindestens eine vordefinierte Fahrstrecke der Kabinentür (111) abdeckt.

6. Vorrichtung (220) nach Anspruch 4 oder 5, wobei die Bezeichnung Folgendes umfasst:
Bezeichnen der ersten Endposition als geschlossene Türposition und der zweiten Endposition als offene Türposition als Reaktion auf den jeweiligen identifizierten Türkupplungsbereich, der am Anfang des ersten aufgezeichneten Stromverbrauchsprofils und am Ende des zweiten aufgezeichneten Stromverbrauchsprofils erscheint,
Bezeichnen der zweiten Endposition als geschlossene Türposition und der ersten Endposition als offene Türposition als Reaktion auf den jeweiligen identifizierten Türkupplungsbereich, der am Anfang des zweiten aufgezeichneten Stromverbrauchsprofils und am Ende des ersten aufgezeichneten Stromverbrauchsprofils erscheint.

7. Vorrichtung (220) nach einem der Ansprüche 4 bis 6, wobei die Bezeichnung Folgendes umfasst:
Bezeichnen der ersten Endposition als geschlossene Endposition und der zweiten Endposition als offene Endposition als Reaktion darauf, dass der im zweiten aufgezeichneten Stromverbrauchsprofil identifizierte Türkupplungsbereich bei einem Stromverbrauchspeak endet und der im ersten aufgezeichneten Stromverbrauchsprofil identifizierte Türkupplungsbereich nicht bei einem Stromverbrauchspeak endet,
Bezeichnen der zweiten Endposition als geschlossene Endposition und der ersten Endposition als offene Endposition als Reaktion darauf, dass der im ersten aufgezeichneten Stromverbrauchsprofil identifizierte Türkupplungsbereich bei einem Stromverbrauchspeak endet und der im zweiten aufgezeichneten Stromverbrauchsprofil identifizierte Türkupplungsbereich nicht bei einem Stromverbrauchspeak endet.

8. Vorrichtung (220) nach einem der Ansprüche 1 bis 7, wobei die einen oder mehreren Parameter, die den Stromverbrauch des Elektromotors beschreiben, eine oder mehrere Eigenschaften des elektrischen Stroms und/oder der Spannung umfassen, die dem Elektromotor zugeführt werden.

9. Vorrichtung (220) nach einem der Ansprüche 1 bis 8, die ferner dazu eingerichtet ist, die Position einer vordefinierten Komponente des Übertragungssystems zu verfolgen, und wobei das Konfigurationsverfahren ferner Folgendes umfasst:
Aufzeichnen einer ersten Referenzposition als Position der Komponente des Übertragungssystems, wenn sich die Kabinentür (111) in der ersten Endposition befindet, und/oder Aufzeichnen einer zweiten Referenzposition als Position der Komponente des Übertragungssystems, wenn sich die Kabinentür (111) in der zweiten Endposition befindet; und
Zuordnen einer der ersten und zweiten Referenzpositionen zur geschlossenen Türposition und der anderen zur offenen Türposition gemäß der Bezeichnung der ersten und zweiten Endpositionen der Kabinentür (111).

10. Vorrichtung (220) nach Anspruch 9, wobei die vordefinierte Komponente des Übertragungssystems einen Antriebsriemen einer Riemenantriebsanordnung umfasst.

11. Vorrichtung (220) nach Anspruch 9 oder 10, die ferner so angeordnet ist, dass sie ein sekundäres Tür-geschlossen-Signal ausgibt, wenn sich die Kabinentür (111) in der ersten oder zweiten Referenzposition befindet, die mit der geschlossenen Türposition verknüpft ist.

12. Vorrichtung (220) nach einem der Ansprüche 1 bis 11, die ferner dazu eingerichtet ist:
ein weiteres Stromverbrauchsprofil aufzuzeichnen, das den Stromverbrauch des Elektromotors als Funktion der Position der Kabinentür (111) beschreibt, wenn die Kabinentür (111) von der ersten Endposition in die zweite Endposition bewegt wird;
in dem weiteren Stromverbrauchsprofil einen jeweiligen Türkupplungsbereich als Unterabschnitt des jeweiligen aufgezeichneten Stromverbrauchsprofils zu identifizieren, der einen kontinuierlichen Zeitraum erhöhten Stromverbrauchs aufweist; und
ein sekundäres Tür-geschlossen-Signal als Reaktion auf eines der folgenden Ereignisse auszugeben, wobei:
der Türkupplungsbereich am Ende des weiteren Stromverbrauchsprofils erscheint,
der Türkupplungsbereich im weiteren Stromverbrauchsprofil bei einem Stromverbrauchsspitzenwert endet.

13. Aufzugskabine (110) umfassend:
eine in der Aufzugskabine (110) angeordnete Kabinentür (111);
ein Türantriebssystem (230) zum Antreiben der Bewegung der Kabinentür (111) zwischen einer ersten und zweiten Endposition ihres Bewegungsbereichs, wobei das Türantriebssystem (230) einen Elektromotor umfasst, der über ein Übertragungssystem mit der Kabinentür (111) gekoppelt ist;
eine mit der Kabinentür (111) verbundene Türkupplung (112) zum vorübergehenden Koppeln der Kabinentür (111) mit einer Stockwerktür (131), wenn sich die Aufzugskabine (110) in einer Stockwerkzone eines Stockwerks (130) befindet, so dass sich die Stockwerktür (131) zusammen mit der Kabinentür (111) zwischen einer geschlossenen Position und einer offenen Position bewegt; und
die Vorrichtung (220) nach einem der Ansprüche 1 bis 12, die zum Steuern des Betriebs der Kabinentür (111) angeordnet ist.

14. Verfahren (300) zum Steuern des Betriebs einer Kabinentür (111) durch Betreiben eines Türantriebssystems (230), wobei die Kabinentür (111) in einer Aufzugskabine (110) angeordnet ist und wobei das Türantriebssystem (230) so angeordnet ist, dass es die Bewegung der Kabinentür (111) zwischen einer ersten und einer zweiten Endposition ihres Bewegungsbereichs antreibt, wobei das Türantriebssystem (230) einen Elektromotor umfasst, der über ein Übertragungssystem mit der Kabinentür (111) gekoppelt ist, und wobei die Aufzugskabine (111) einen Türkoppler (112) umfasst, der mit der Kabinentür (111) verbunden ist, um die Kabinentür (111) vorübergehend mit einer Stockwerktür (131) zu koppeln, wenn sich die Aufzugskabine (110) in einer Stockwerkzone eines Stockwerks (130) befindet, so dass sich die Stockwerktür (131) zusammen mit der Kabinentür (111) zwischen einer geschlossenen Position und einer offenen Position bewegt, wobei das Verfahren (300) Folgendes umfasst:
Überwachen (302) eines oder mehrerer Parameter die den Stromverbrauch des Elektromotors bei der Bewegung der Kabinentür (111) beschreiben;
wobei das Verfahren (300) Folgendes umfasst:
Aufzeichnen eines ersten Stromverbrauchsprofils, das den Stromverbrauch des Elektromotors als Funktion der Position der Kabinentür (111) beschreibt, wenn die Kabinentür (111) von der ersten Endposition in die zweite Endposition bewegt wird,
Aufzeichnen eines zweiten Stromverbrauchsprofils, das den Stromverbrauch des Elektromotors als Funktion der Position der Kabinentür (111) beschreibt, wenn die Kabinentür (111) von der zweiten Endposition in die erste Endposition bewegt wird, und **gekennzeichnet durch** das Bestimmen einer der ersten und zweiten Endpositionen als geschlossene Türposition und der anderen der ersten und zweiten Endpositionen als offene Türposition basierend auf einer oder mehreren Eigenschaften des ersten und zweiten Stromverbrauchsprofils.

15. Computerprogramm, das computerlesbaren Programmcode umfasst, der so konfiguriert ist, dass er die Durchführung des Verfahrens nach Anspruch 14 veranlasst, wenn der Programmcode auf der Vorrichtung (220) nach den Ansprüchen 1 bis 12 ausgeführt wird.

## Revendications

1. Appareil (220) permettant de commander le fonctionnement d'une porte de cabine (111) disposée dans une cabine d'ascenseur (110) par l'actionnement d'un système d'entraînement de porte (230) conçu pour entraîner le mouvement de la porte de cabine (111) entre des première et seconde positions d'extrémité de sa plage de mouvement, dans lequel le système d'entraînement de porte (230) comprend un moteur électrique qui est couplé à la porte de cabine (111) par un système de transmission et dans lequel la cabine d'ascenseur (111) comprend un coupleur de porte (112) connecté à la porte de cabine (111) pour coupler temporairement la porte de cabine (111) à une porte palière (131) lorsque la cabine d'ascenseur (110) se trouve dans une zone de palier d'un palier (130) de telle sorte que la porte palière (131) se déplace entre une position fermée et une position ouverte conjointement avec la porte de cabine (111), l'appareil (220) étant agencé pour commander le mouvement de la porte de cabine (111) et surveiller un ou plusieurs paramètres qui décrivent la consommation d'énergie dudit moteur électrique lors du mouvement de la porte de cabine (111),
dans lequel
l'appareil (220) est agencé pour exécuter une procédure de configuration comprenant :
l'enregistrement d'un premier profil de consommation d'énergie qui décrit la consommation d'énergie dudit moteur électrique en fonction de la position de la porte de cabine (111) lorsque la porte de cabine (111) est déplacée de la première position d'extrémité à la seconde position d'extrémité,
l'enregistrement d'un second profil de consommation d'énergie qui décrit la consommation d'énergie dudit moteur électrique en fonction de la position de la porte de cabine (111) lorsque la porte de cabine (111) est déplacée de la seconde position d'extrémité à la première position d'extrémité, et **caractérisé par** la désignation de l'une des première et seconde positions d'extrémité en tant que position de porte fermée et de l'autre des première et seconde positions d'extrémité en tant que position de porte ouverte sur la base d'une ou de plusieurs caractéristiques des premier et second profils de consommation d'énergie.

2. Appareil (220) selon la revendication 1, dans lequel la mise en œuvre de la procédure de configuration comprend :
l'appareil (220) commandant l'ensemble d'entraînement de porte (230) pour déplacer la porte de cabine (111) de la première position d'extrémité à la seconde position d'extrémité pour capturer le premier profil de consommation d'énergie ; et
l'appareil (220) commandant l'ensemble d'entraînement de porte (230) pour déplacer la porte de cabine (111) de la seconde position d'extrémité à la première position d'extrémité pour capturer le second profil de consommation d'énergie.

3. Appareil (220) selon la revendication 2, dans lequel la mise en œuvre de la procédure de configuration comprend :
l'appareil (220) commandant l'ensemble d'entraînement de porte (230) pour déplacer la porte de cabine (111) de la première position d'extrémité vers la seconde position d'extrémité jusqu'à ce que la consommation d'énergie dudit moteur électrique dépasse un seuil de puissance de crête prédéfini ; et
l'appareil (220) commandant l'ensemble d'entraînement de porte (230) pour déplacer la porte de cabine (111) de la seconde position d'extrémité vers la première position d'extrémité jusqu'à ce que la consommation d'énergie dudit moteur électrique dépasse le seuil de puissance de crête prédéfini.

4. Appareil (220) selon l'une quelconque des revendications 1 à 3, dans lequel ladite désignation comprend :
l'identification, dans chacun des premier et second profils de consommation d'énergie enregistrés, d'une plage de coupleurs de porte respective en tant que sous-partie du profil de consommation d'énergie enregistré respectif qui présente une période continue de consommation d'énergie accrue ; et
la désignation de l'une des première et seconde positions d'extrémité en tant que position de porte fermée et de l'autre des première et seconde positions d'extrémité en tant que position de porte ouverte en fonction d'une ou de plusieurs caractéristiques des plages de coupleurs de porte respectives identifiées dans les premier et second profils de consommation d'énergie enregistrés.

5. Appareil (220) selon la revendication 4, dans lequel l'identification de la plage de coupleurs de porte dans un profil de consommation d'énergie comprend l'identification d'une sous-partie du profil de consommation d'énergie respectif qui présente une période continue de consommation d'énergie accrue qui répond à un ou à plusieurs des critères de plage de coupleurs de porte suivants :
la consommation d'énergie est au moins d'une première marge prédéfinie supérieure à une consommation d'énergie de base indiquée dans le profil de consommation d'énergie respectif, mais la consommation d'énergie ne dépasse pas un seuil de puissance de crête prédéfini,
ladite sous-partie couvre au moins une distance de déplacement prédéfinie de la porte de cabine (111).

6. Appareil (220) selon la revendication 4 ou 5, dans lequel ladite désignation comprend :
la désignation de la première position finale en tant que position de porte fermée et la seconde position finale en tant que position de porte ouverte en réponse à la plage de coupleur de porte identifiée respective apparaissant au début du premier profil de consommation d'énergie enregistré et à la fin du second profil de consommation d'énergie enregistré,
la désignation de la seconde position d'extrémité en tant que position de porte fermée et la première position d'extrémité en tant que position de porte ouverte en réponse à la plage de coupleur de porte identifiée respective apparaissant au début du second profil de consommation d'énergie enregistré et à la fin du premier profil de consommation d'énergie enregistré.

7. Appareil (220) selon l'une quelconque des revendications 4 à 6, dans lequel ladite désignation comprend :
la désignation de la première position d'extrémité en tant que position d'extrémité fermée et la seconde position d'extrémité en tant que position d'extrémité ouverte en réponse à la plage de coupleur de porte identifiée dans le second profil de consommation d'énergie enregistré se terminant par un pic de consommation d'énergie et à la plage de coupleur de porte identifiée dans le premier profil de consommation d'énergie enregistré ne se terminant pas par un pic de consommation d'énergie,
la désignation de la seconde position d'extrémité peut être la position d'extrémité fermée et la première position d'extrémité peut être la position d'extrémité ouverte en réponse à la plage de coupleur de porte identifiée dans le premier profil de consommation d'énergie enregistré se terminant par un pic de consommation d'énergie et à la plage de coupleur de porte identifiée dans le second profil de consommation d'énergie enregistré ne se terminant pas par un pic de consommation d'énergie.

8. Appareil (220) selon l'une quelconque des revendications 1 à 7, dans lequel lesdits un ou plusieurs paramètres qui décrivent la consommation d'énergie dudit moteur électrique comprennent une ou plusieurs caractéristiques du courant électrique et/ou de la tension fournis audit moteur électrique.

9. Appareil (220) selon l'une quelconque des revendications 1 à 8, agencé en outre pour suivre la position d'un composant prédéfini dudit système de transmission et dans lequel la procédure de configuration comprend en outre :
l'enregistrement d'une première position de référence en tant que position dudit composant du système de transmission lorsque la porte de cabine (111) est à la première position d'extrémité et/ou l'enregistrement d'une seconde position de référence en tant que position dudit composant du système de transmission lorsque la porte de cabine (111) est à la seconde position d'extrémité ; et
l'association de l'une des première et seconde positions de référence à la position de porte fermée et l'autre à la position de porte ouverte conformément à la désignation des première et seconde positions d'extrémité de la porte de cabine (111).

10. Appareil (220) selon la revendication 9, dans lequel ledit composant prédéfini du système de transmission comprend une courroie d'entraînement d'un ensemble d'entraînement par courroie.

11. Appareil (220) selon la revendication 9 ou 10, agencé en outre pour émettre un signal de porte secondaire fermée en réponse au positionnement de la porte de cabine (111) dans l'une des première et seconde positions de référence associées à la position de porte fermée.

12. Appareil (220) selon l'une quelconque des revendications 1 à 11, agencé en outre pour :
enregistrer un profil de consommation d'énergie supplémentaire qui décrit la consommation d'énergie dudit moteur électrique en fonction de la position de la porte de cabine (111) lorsque la porte de cabine (111) est déplacée de la première position d'extrémité à la seconde position d'extrémité ;
identifier, dans le profil de consommation d'énergie supplémentaire, une plage de coupleurs de porte respective en tant que sous-partie du profil de consommation d'énergie enregistré respectif qui présente une période continue de consommation d'énergie accrue ; et
émettre un signal de porte secondaire fermée en réponse à l'une des situations suivantes :
la plage de couplage de porte apparaissant à la fin du profil de consommation d'énergie supplémentaire,
la plage de coupleurs de porte dans le profil de consommation d'énergie supplémentaire se terminant par un pic de consommation d'énergie.

13. Cabine d'ascenseur (110) comprenant :
une porte de cabine (111) disposée dans la cabine d'ascenseur (110) ;
un système d'entraînement de porte (230) pour entraîner le mouvement de la porte de cabine (111) entre des première et seconde positions d'extrémité de sa plage de mouvement, le système d'entraînement de porte (230) comprenant un moteur électrique qui est couplé à la porte de cabine (111) par un système de transmission ;
un coupleur de porte (112) relié à la porte de cabine (111) pour coupler temporairement la porte de cabine (111) à une porte palière (131) lorsque la cabine d'ascenseur (110) se trouve dans une zone de palier d'un palier (130) de telle sorte que la porte palière (131) se déplace entre une position fermée et une position ouverte conjointement avec la porte de cabine (111) ; et
l'appareil (220) selon l'une quelconque des revendications 1 à 12 agencé pour commander le fonctionnement de la porte de cabine (111).

14. Procédé (300) de commande du fonctionnement d'une porte de cabine (111) par le fonctionnement d'un système d'entraînement de porte (230), la porte de cabine (111) étant disposée dans une cabine d'ascenseur (110) et le système d'entraînement de porte (230) étant disposé pour entraîner le mouvement de la porte de cabine (111) entre des première et seconde positions d'extrémité de sa plage de mouvement, le système d'entraînement de porte (230) comprenant un moteur électrique qui est couplé à la porte de cabine (111) par un système de transmission, et la cabine d'ascenseur (111) comprenant un coupleur de porte (112) connecté à la porte de cabine (111) pour coupler temporairement la porte de cabine (111) à une porte palière (131) lorsque la cabine d'ascenseur (110) se trouve dans une zone de palier d'un palier (130) de telle sorte que la porte palière (131) se déplace entre une position fermée et une position ouverte conjointement avec la porte de cabine (111), le procédé (300) comprenant : la surveillance (302) d'un ou de plusieurs paramètres qui décrivent la puissance de consommation dudit moteur électrique lors du mouvement de la porte de cabine (111) ;
dans lequel
le procédé (300) comprend :
l'enregistrement d'un premier profil de consommation d'énergie qui décrit la consommation d'énergie dudit moteur électrique en fonction de la position de la porte de cabine (111) lorsque la porte de cabine (111) est déplacée de la première position d'extrémité à la seconde position d'extrémité,
l'enregistrement d'un second profil de consommation d'énergie qui décrit la consommation d'énergie dudit moteur électrique en fonction de la position de la porte de cabine (111) lorsque la porte de cabine (111) est déplacée de la seconde position d'extrémité à la première position d'extrémité, et **caractérisé par** la désignation de l'une des première et seconde positions d'extrémité en tant que position de porte fermée et de l'autre des première et seconde positions d'extrémité en tant que position de porte ouverte sur la base d'une ou de plusieurs caractéristiques des premier et second profils de consommation d'énergie.

15. Programme informatique comprenant un code de programme lisible par ordinateur configuré pour provoquer l'exécution du procédé selon la revendication 14 lorsque ledit code de programme est exécuté sur l'appareil (220) selon les revendications 1 à 12.
